(19) Europäisches Patentamt

European Patent Office

Office européen des brevets

(11) **EP 0 664 232 B1**

(12) **FASCICULE DE BREVET EUROPEEN**

(45) Date de publication et mention
de la délivrance du brevet:
**22.04.1998 Bulletin 1998/17**

(51) Int. Cl.⁶: **B60C 15/00**, B60C 9/02

(21) Numéro de dépôt: **95100188.2**

(22) Date de dépôt: **09.01.1995**

(54) **Ancrage de la carcasse d'un pneumatique**

Verankerung der Karkasse eines Reifens

Anchoring of the carcass of a tyre

(84) Etats contractants désignés:
**DE ES FR GB IT LU**

(30) Priorité: **21.01.1994 FR 9400795**

(43) Date de publication de la demande:
**26.07.1995 Bulletin 1995/30**

(73) Titulaire: **SEDEPRO**
**F-75015 Paris (FR)**

(72) Inventeurs:
• **Herbelleau, Yves**
**F-63200 Riom (FR)**
• **Pradelle, Jean-Jacques**
**F-63000 Clermont-Ferrand (FR)**

(74) Mandataire: **Bauvir, Jacques**
**Michelin & Cie,**
**Service SGD/LG/PI Ladoux**
**63040 Clermont-Ferrand Cedex 01 (FR)**

(56) Documents cités:
**EP-A- 0 582 196**      **DE-A- 2 424 993**
**FR-A- 1 256 432**      **FR-A- 2 132 509**
**US-A- 4 510 291**

**Description**

La présente invention concerne les pneumatiques. Plus particulièrement, elle concerne la disposition des fils de renforcement dans les flancs et dans les bourrelets ; elle concerne également l'ancrage des fils de carcasse dans le bourrelet.

Le renforcement de carcasse des pneumatiques est à l'heure actuelle constitué par une ou plusieurs nappes, le plus souvent radiales, retournées autour d'une ou de plusieurs tringles disposées dans les bourrelets. Les bourrelets constituent le moyen permettant de fixer le pneumatique sur la jante. La rigidité du bourrelet ainsi constitué est très grande.

Il est souhaitable d'assurer une évolution progressive de la rigidité du bourrelet lorsque l'on se déplace radialement vers le haut en direction du flanc. Dans la technique actuelle, il est assez difficile d'assurer une telle évolution progressive de rigidité entre le flanc et le bourrelet. Le flanc doit présenter une souplesse importante, et le bourrelet doit au contraire présenter une importante rigidité. En effet, les renforts que l'on dispose dans cette partie du pneumatique présentent toujours inévitablement une discontinuité : à l'extrémité radialement supérieure du retournement de carcasse, on passe sans transition dans une zone dépourvue de ce retournement de carcasse, zone qui est donc inévitablement moins rigide. Pour rappel, "radialement vers le haut", ou "radialement supérieur" signifie vers les plus grands rayons.

Dans le cas des carcasses radiales, l'état de la technique connaît déjà d'autres principes de conception qui permettent d'éviter les retournements autour d'une tringle. A titre d'exemple, on peut citer le brevet US 3 072 171, dans lequel on proposait de supprimer le retournement des nappes de carcasse, et de disposer des fils orientés circonférentiellement à côté des fils de carcasse orientés radialement. Dans la structure connue, il est cependant difficile d'assurer un ancrage suffisamment résistant des fils de carcasse aux fils orientés circonférentiellement, ce qui fait que cette proposition n'a jamais connu d'application réelle.

Le but de l'invention est de proposer une nouvelle façon de disposer le fil de renforcement de carcasse afin de pouvoir assurer une évolution aussi progressive que possible de la rigidité de flexion du flanc du pneumatique lorsque l'on se rapproche du bourrelet, tout en permettant l'ancrage d'un très grand nombre de fils de carcasse.

Un autre but poursuivi par l'invention est de proposer une structure de renforcement pour pneumatique qui se prête aisément à une fabrication mécanisée.

Le pneumatique selon l'invention, comportant au moins une carcasse ancrée de chaque côté du pneumatique vers le bas dans un bourrelet dont la base est destinée à être montée sur un siège de jante, chaque bourrelet se prolongeant vers le haut par un flanc, les flancs rejoignant vers le haut une bande de roulement, la carcasse comportant des portions de fil de carcasse disposés de façon adjacente et formant dans la partie haute du flanc un seul alignement circonférentiel de portions de fil allant de haut vers le bas dans le flanc, ladite carcasse étant ancrée dans ledit bourrelet au moyen d'au moins une pile de fils orientés circonférentiellement, est caractérisé en ce que, en se déplaçant radialement depuis le haut du flanc vers le bas du bourrelet, ledit alignement se divise en au moins deux alignements circonférentiels écartés axialement, et en ce que l'ensemble des fils orientés circonférentiellement disposés dans le bourrelet est localisé entre lesdits alignements de fil de carcasse, et/ou axialement d'un seul côté de ceux-ci, et en ce que la carcasse est fabriquée à partir d'un fil continu de carcasse, toutes lesdites portions de fil de chacun des alignements du bourrelet étant reliées deux à deux par une boucle située au niveau radial le plus proche de la base du bourrelet.

Dans le présent mémoire, le terme "fil" désigne en toute généralité aussi bien des monofilaments que des multifilaments, ou des assemblages comme des câbles, des retors ou bien encore n'importe quel type d'assemblage équivalent, et ceci, quels que soit la matière et le traitement de ces fils, par exemple traitement de surface ou enrobage ou préencollage pour favoriser l'adhésion sur le caoutchouc. Une carcasse sera dite radiale lorsque ses fils sont disposés à 90°, mais aussi, selon la terminologie en usage, à un angle proche de 90°.

De préférence, les fils orientés circonférentiellement ne sont pas au contact direct des fils orientés radialement. Pour les pneumatiques subissant des sollicitations importantes, afin d'assurer une bonne transmission des efforts entre les portions de fil de carcasse et les fils orientés circonférentiellement, on interpose un caoutchouc à haut module d'élasticité, c'est à dire un mélange de caoutchouc ayant une dureté Shore A supérieure à 70, entre les fils orientés circonférentiellement et l'alignement de fils de carcasse adjacent.

On sait que dans la technique actuelle, la ou les nappes de carcasse sont retournées autour d'une tringle. La tringle remplit alors une fonction d'ancrage de carcasse, c'est à dire reprend la tension se développant dans les fils de carcasse sous l'effet de la pression de gonflage.

L'agencement revendiqué ici assure la fonction d'ancrage de la carcasse.

On sait aussi que, toujours dans l'état de la technique, la même tringle assure en outre une fonction de serrage du bourrelet sur sa jante. L'agencement revendiqué ici est également capable d'assurer un serrage suffisant.

Il va sans dire que l'invention peut être utilisée en adjoignant d'un côté et/ou de l'autre de la structure revendiquée d'autres éléments faisant aussi partie de la carcasse ou de son ancrage, comme certaines variantes vont l'illustrer. De même, l'invention peut être utilisée en multipliant les carcasses de même nature, ou même en adjoignant un autre type de carcasse à une carcasse conforme à l'invention. Tous les détails de réalisation sont donnés dans la description qui suit, à consulter avec les figures suivantes :

La figure 1 est une coupe radiale montrant essentiellement un flanc et un bourrelet d'un pneumatique selon l'invention ;

La figure 2 est une vue en perspective, montrant schématiquement la disposition des fils de renforcement.

La figure 3 est une coupe radiale montrant une deuxième variante d'exécution de l'invention ;

Aux différentes figures, on voit les différentes parties bien connues d'un pneumatique, plus spécialement concernées par la présente invention, à savoir le flanc 1 et le bourrelet 2. Le renforcement de carcasse est constitué par des portions de fil, ici orientées radialement dans les flancs 1.

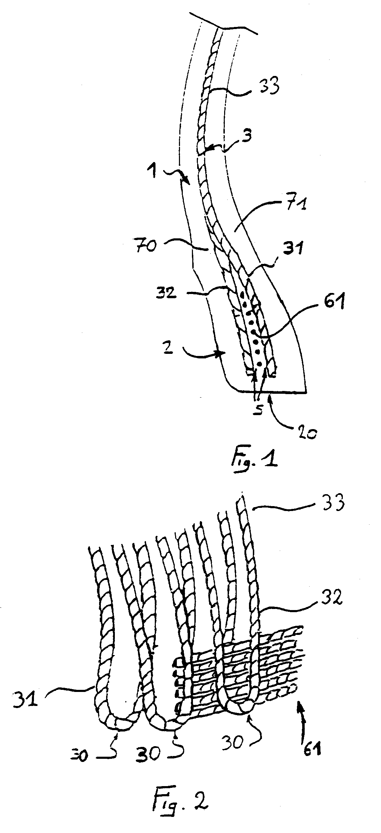

Dans la variante de réalisation la plus simple, illustée par les figures 1 et 2, l'ensemble des fils orientés circonférentiellement disposés dans le bourrelet est localisé en totalité entre les alignements (31, 32) de fil de carcasse. En outre, et ceci n'est pas nécessairement combiné à la caractéristique précédente, il y a une seule carcasse : le fil de carcasse de chacun des alignements 31, 32 présents dans le bourrelet est issu d'un même alignement 3 du flanc 1. Autrement dit, dans le flanc, le fil de carcasse est disposé en une seule couche.

Le fil 3 forme des boucles juxtaposées et adjacentes. En disposant le fil en boucles, on évite tous les bords coupés, qui sont autant de discontinuités. En effet, le fil de renforcement est en général un câble ; les extrémités de câble présentent, à l'endroit de la coupe, des épanouissements dans lesquels tous les monofilaments s'écartent les uns des autres. Cela constitue des amorces de rupture à l'intérieur du pneumatique. Lorsque les fils sont en matière textile, ils sont encollés afin d'assurer une très bonne adhésion au caoutchouc. Il n'y a malheureusement pas de préencollage sur chaque extrémité de câble après qu'il ait été coupé, ce qui fait que là encore le caoutchouc n'adhère pas à l'endroit de la coupe, d'où le risque d'amorces de rupture à l'intérieur du bourrelet. Avec la disposition décrite ici, ce genre d'inconvénient n'est pas à craindre.

Par la présence de boucles entre allers et retours, on voit que la carcasse est du type "mono fil", c'est à dire que la carcasse est fabriquée à partir d'un seul fil, et non pas à partir d'autant de tronçons qu'il y a d'arceaux radiaux dans la carcasse, tous calandrés préalablement pour former une nappe. Bien entendu, la carcasse pourrait ne pas être fabriquée dans son intégralité à partir d'un seul fil. Selon la présente variante, il convient de n'utiliser cependant qu'un petit nombre de fils et à disposer les fins et les débuts de fil plutôt sous la bande de roulement que dans les bourrelets.

Aux figures 1 à 3, on voit que le fil de carcasse, qui forme dans chaque flanc 1 un seul alignement 3 circonférentiel d'allers et retours formant des portions de fil juxtaposées, est disposé de façon à ce que, en partant d'un flanc pour rejoindre la base d'un bourrelet 2, la carcasse se divise en deux alignements circonférentiels de fils radiaux 31, 32 ou 33, 34 s'écartant axialement progressivement l'un de l'autre.

De préférence, les portions de fil de carcasse sont disposées de façon à ce que, dans les flancs, deux portions de fil de carcasse adjacentes soient issues d'alignements différents du bourrelet 2. Autrement dit, dans le flanc, il y a alternance des fils issus de chacun des alignements 31 et 32 ou 33 et 34 du bourrelet 2.

Ces mises en oeuvre de l'invention sont tout particulièrement intéressantes parce que, au niveau du flanc 1 du pneumatique, il y a un seul alignement circonférentiel de portions de fils (c'est à dire une seule couche de fils). Ceci est de nature à autoriser une très grande souplesse des flancs : la rigidité de flexion du flanc à l'écrasement d'un pneumatique pourvu d'une telle structure de renforcement reste faible, bien plus faible que lorsqu'il y a deux nappes de carcasse comme dans des architectures couramment employées lorsque l'on multiplie le nombre de fils de carcasse, pour les pneumatiques fortement sollicités, ou lorsque l'on utilise des fils moins résistants.

Cela aboutit à une disposition en quinconce qui apparaît très bien à la perspective de la figure 2. Les deux alignements sont séparés par une pile 61 de fils orientés circonférentiellement, avec interposition de caoutchouc 5, ce qui permet de bien imprégner les fils et d'assurer la parfaite cohésion du bourrelet, tout en maintenant les alignements 31 et 32 séparés axialement l'un de l'autre. Cette répartition des fils favorise la parfaite mise en place des portions de fil, et également de leurs boucles, avec une bonne imprégnation par le caoutchouc. On peut ajuster la hauteur à laquelle on organise cette séparation en plusieurs alignements. De cette façon, on élève très progressivement la rigidité de flexion.

Il pourrait bien entendu y avoir, dans le bourrelet, plus de deux alignements circonférentiels de fils s'écartant axialement progressivement les uns des autres, tous issus du même alignement du flanc.

Dans tous les cas, on divise par deux ou par plus de deux le nombre de fils de chaque alignement du bourrelet par rapport au nombre de fil de l'alignement du flanc dont ils sont issus, ce qui est très intéressant car le rayon étant plus petit à hauteur du bourrelet, il y a moins de place pour loger les fils alignés que dans le flanc.

L'invention permet d'utiliser une plus grande densité de fils. Autrement dit, grâce à l'invention, on augmente le nombre de fils de carcasse à partir duquel il faudra recourir à une carcasse supplémentaire distincte, faute de place dans le bourrelet pour loger l'ensemble des fils.

Au fur et à mesure que l'on se rapproche du bourrelet 2, les fils de carcasse se répartissent en deux, ou plus que deux alignements circonférentiels qui se séparent progressivement l'un de l'autre. On peut bien entendu ajuster la hauteur à laquelle on organise cette séparation en plusieurs alignements, en interposant du caoutchouc sur une hauteur choisie, ce caoutchouc étant éventuellement renforcé par des fils orientés circonférentiellement remontant sur toute la hauteur radiale disponible entre lesdits alignements.

Afin d'assurer un parfait ancrage d'une carcasse, on réalise un bourrelet composite stratifié. A l'intérieur du bourrelet 2, entre les alignements de fil de carcasse 31, 32, on dispose des fils orientés circonférentiellement 61. Ceux-ci sont disposés en une pile comme sur les figures, ou en plusieurs piles adjacente, ou en paquets, ou en toute disposition judicieuse, selon le type de pneumatique. Chaque alignement circonférentiel de fils de carcasse est bordé, axialement du côté où sont disposés les fils 61 orientés circonférentiellement, par une couche 5 d'un mélange de caoutchouc ayant une dureté Shore A supérieure à 70, assurant la liaison entre les fils.

Les couches 5 peuvent être obtenue, dans le pneumatique vulcanisé, parce que l'on a déposé du caoutchouc à la seule fin de réaliser lesdites couches 5, ou bien parce qu'on a utilisé, pour obtenir les enroulements 61 et/ou éventuellement pour former la carcasse, du fil suffisamment enrobé de caoutchouc pour que, après moulage il apparaisse les couches 5 que l'on vient de décrire.

Le fil employé pour les piles de fil orienté circonférentiellement est de préférence du fil métallique laitonné. Dans chaque pile telle que 61, les fils sont sensiblement concentriques et superposés. Quant à la manière d'obtenir lesdites piles de fil, on peut superposer des anneaux de diamètre progressivement croissant, ou bien on peut par exemple bobiner plusieurs tours de fil.

Il n'est pas nécessaire d'ajouter un mélange de caoutchouc formulé spécifiquement et uniquement pour assurer l'imprégnation du fil de carcasse 3, ou des enroulements circonférentiels de fil 61. Le même type de mélange que celui formulé pour les couches 5 assure les fonctions de calandrage et de liaison entre les portions de fil d'une même pile, et entre les différentes piles de fil, par imprégnation lors du moulage.

Les expérimentations ont révélé des résultats très intéressants en endurance en utilisant, pour les couches de caoutchouc 5, un mélange contenant un élastomère synthétique SBR utilisé seul, ou en coupage avec du polybutadiène, ledit SBR ayant une température de transition vitreuse (Tg) comprise entre -70°C et -30°C et ledit polybutadiène ayant une Tg comprise entre -40°C et -10°C, le ou lesdits élastomères synthétiques étant utilisés en proportion totalisée d'au moins 40 % du poids total d'élastomère, le solde étant constitué par du caoutchouc naturel. Les Tg considérées sont mesurées par analyse thermique différentielle.

De préférence, on utilise un SBR solution. Par exemple, on utilise un mélange contenant 50 % de SBR solution ayant une Tg valant -48°C, contenant 50 % de NR, avec addition de charges renforçantes et de résine pour obtenir la dureté Shore A souhaitée.

Pour obtenir un bon collage d'une couche 5 de caoutchouc à la fois sur des fils métalliques laitonnés, utilisés comme fils circonférentiels 61 et sur les fils textiles 3 de la carcasse, et pour garantir une bonne endurance de ce collage à haute température, ladite couche 5 de caoutchouc comporte un taux de soufre important et on emploie des additifs promoteurs d'adhésion (par exemple des sels métalliques de cobalt ou de nickel) en proportions bien ajustées. On utilise par exemple un taux de soufre compris entre 5 et 8 % du poids total d'élastomère et du cobalt en quantité de 0.2 % du poids total d'élastomère.

Afin d'assurer une excellente reprise de la tension apparaissant dans les fils de carcasse sous l'effet de la pression de gonflage, il est souhaitable que lesdites boucles soient disposées radialement à un niveau inférieur à la partie la plus basse des piles de fils adjacentes, orientées circonférentiellement.

De préférence, le fil 3 de carcasse forme des allers et retours d'un bourrelet 2 à l'autre du pneumatique en passant sous la bande de roulement ; le fil est donc continu d'un bourrelet à l'autre. Les différents moyens de renforcement de la structure du pneumatique sous la bande de roulement ne font pas partie de la présente invention. Il suffit de signaler qu'ils peuvent être constitués par toutes les méthodes de renforcement adéquates, comme par exemple des fils disposés de façon à assurer une ceinture triangulée. En outre, dans le bourrelet, on peut bien sûr disposer un mélange de caoutchouc très raide, du genre utilisé pour les bourrages sur tringle dans les pneumatiques classiques. Ce caoutchouc de bourrage est disposé d'un côté et/ou de l'autre du renforcement de carcasse.

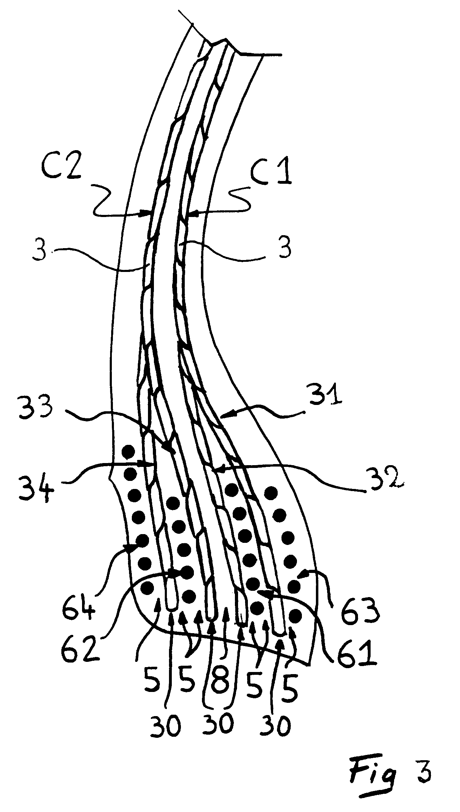

A la figure 3, l'invention est appliquée à un renforcement comportant deux carcasses C1 et C2. L'ancrage de celles-ci est assurée par deux structures dont l'une est l'image en miroir de l'autre. On retouve chaque fois une structure similaire à celle de la variante précédente, à laquelle on a ajouté d'un seul côté axialement une pile 63, 64 de fils orientés circonférentiellement. Les alignements (32, 33) adjacents appartenant à des carcasses différentes sont, dans le bourrelet (2), séparés l'un de l'autre par une matière (8) de remplissage dépourvue de fils circonférentiels.

Afin d'assurer une transition aussi progressive que possible entre la zone de contact avec la jante et l'équateur, au dessus de la zone de contact avec la jante et en dessous de l'équateur, les constituants en caoutchouc situés de part et d'autre de la carcasse respectent la relation suivante :

$$\frac{\sum\limits_{i} E_i \, e_i \, (\text{ext})}{\sum\limits_{j} E_j \, e_j \, (\text{int})} \geq 3$$

où $E_i$ ou $E_j$ est le module dans la direction radiale, $e_i$ ou $e_j$ l'épaisseur de chaque constituant "i" ou "j" en caoutchouc respectivement à l'extérieur 70 et à l'intérieur 71 de l'ensemble des alignements de fil de carcasse. Lorsqu'il y a plusieurs alignements 3 de carcasse dans cette partie du pneumatique, notamment dans le flanc, pour l'application de cette formule, on considère seulement les constituants à l'extérieur du fil le plus extérieur, et respectivement à l'intérieur du fil le plus intérieur.

Lorsque le module de tous les constituants employés est comparable, cela signifie qu'il convient de faire passer la carcasse le plus possible du coté intérieur du flanc. On peut aussi utiliser des gommes plus molles (c'est à dire de module plus faible) du coté intérieur du flanc. Cela assure un bon compromis entre l'endurance du pneu et le confort qu'il procure.

On voit que la structure de renforcement proposée permet une évolution progressive des rigidités entre le flanc et le bourrelet. Cette structure propose au concepteur de pneumatique de très grandes latitudes de réglage de cette rigidité et de son évolution en jouant très simplement sur la densité des fils orientés circonférentiellement, et éventuellement sur le nombre d'alignements circonférentiels de fils de carcasse dans les bourrelets, et sur la nature des fils.

Cette structure composite permet d'obtenir une bonne assise du bourrelet sur sa jante, tout en étant peu encombrante et en utilisant au mieux les matériaux employés.

La structure proposée ne présente aucune discontinuité de renforcement, ce qui est très favorable à l'endurance du pneumatique, et ce qui conduit aussi, de façon inattendue à un meilleur confort du pneumatique.

Afin de positionner les fils de renforcement de façon aussi précise que possible, il est très avantageux de confectionner le pneumatique sur support rigide, par exemple un noyau rigide imposant la forme de sa cavité intérieure. On applique sur ce noyau, dans l'ordre requis par l'architecture finale, tous les constituants du pneumatique, qui sont disposés directement à leur place finale, sans subir de conformation à aucun moment de la confection. Dans ce cas, le pneumatique peut être moulé et vulcanisé comme exposé dans le brevet US 4 895 692.

**Revendications**

1. Pneumatique comportant au moins une carcasse ancrée de chaque côté du pneumatique vers le bas dans un bourrelet (2) dont la base (20) est destinée à être montée sur un siège de jante, chaque bourrelet se prolongeant vers le haut par un flanc (1), les flancs (1) rejoignant vers le haut une bande de roulement, la carcasse comportant des portions de fil de carcasse disposés de façon adjacente et formant dans la partie haute du flanc un seul alignement (3) circonférentiel de portions de fil allant de haut vers le bas dans le flanc (1), ladite carcasse étant ancrée dans ledit bourrelet (2) au moyen d'au moins une pile (61 ou 62) de fils orientés circonférentiellement, caractérisé en ce que, en se déplaçant radialement depuis le haut du flanc vers le bas du bourrelet, ledit alignement (3) se divise en au moins deux alignements (31, 32) circonférentiels écartés axialement, et en ce que l'ensemble des fils orientés circonférentiellement (61, 62) disposés dans le bourrelet est localisé entre lesdits alignements (31, 32) de fil de carcasse, et/ou axialement d'un seul côté de ceux-ci, et en ce que la carcasse est fabriquée à partir d'un fil (3) continu de carcasse, toutes lesdites portions de fil de chacun des alignements (31, 32) du bourrelet (2) étant reliées deux à deux par une boucle (30) située au niveau radial le plus proche de la base (20) du bourrelet.

2. Pneumatique selon la revendication 1, caractérisé en ce que l'ensemble des fils orientés circonférentiellement disposés dans le bourrelet est localisé en totalité entre lesdits alignements (31, 32) de fil de carcasse.

3. Pneumatique selon l'une des revendications 1 ou 2, caractérisé en ce qu'une couche (5) de mélange de caoutchouc ayant une dureté Shore A supérieure à 70 est interposée axialement entre les fils orientés circonférentiellement et l'alignement de fils de carcasse correspondant adjacent.

4. Pneumatique selon l'une des revendications 1 à 3, caractérisé en ce que lesdites boucles (30) sont disposées radialement à un niveau inférieur à la partie la plus basse de la ou des piles de fils circonférentiels adjacentes.

5. Pneumatique selon l'une des revendications 1 à 4, caractérisé en ce qu'il comporte deux carcasses (C1, C2), les alignements (32, 33) de celles-ci adjacents dans le bourrelet (2) étant séparés l'un de l'autre par une matière (8) de remplissage dépourvue de fils circonférentiels.

6. Pneumatique selon l'une des revendications 1 à 5, caractérisé en ce que, dans la partie du flanc située juste au dessus de la zone de contact avec la jante, et en dessous de l'équateur, les constituants en caoutchouc situés de part et d'autre de l'ensemble des alignements de fil de carcasse respectent la relation suivante :

$$\frac{\sum_i E_i\, e_i\, (ext)}{\sum_j E_j\, e_j\, (int)} \geq 3$$

où $E_i$ ou $E_j$ est le module dans la direction radiale, $e_i$ ou $e_j$ l'épaisseur de chaque constituant "i" ou "j" en caoutchouc respectivement à l'extérieur et à l'intérieur de l'ensemble des alignements de fil de carcasse.

7. Pneumatique selon la revendication 3, caractérisé en ce que la couche (5) de mélange de caoutchouc est un mélange contenant un élastomère synthétique SBR dont la Tg est comprise entre -70°C et -30°C, en proportion d'au moins 40 % du poids total d'élastomère.

8. Pneumatique selon la revendication 7, caractérisé en ce que le SBR est utilisé en coupage avec du PB dont la Tg est comprise entre -40°C et -10°C, la proportion totale d'élastomère synthétique SBR et PB valant au moins 40 % du poids total d'élastomère.

9. Pneumatique selon la revendication 7 ou 8, caractérisé en ce que le SBR utilisé est du type solution.

10. Pneumatique selon l'une des revendications 7 à 9, caractérisé en ce que le taux de soufre du mélange de ladite couche (5) est compris entre 5 et 8 % du poids total d'élastomère et ledit mélange comporte des additifs promoteurs d'adhésion.

**Claims**

1. A tyre comprising at least one carcass anchored on each side of the tyre towards the bottom in a bead (2) the base (20) of which is intended to be mounted on a rim seat, each bead being extended upwards by a sidewall (1), the sidewalls (1) joining a tread towards the top, the carcass comprising portions of carcass cord arranged adjacent to each other and forming in the upper part of the sidewall, a single circumferential alignment (3) of cord portions extending downwards in the sidewall (1), said carcass being anchored in said bead (2) by means of at least one pile (61 or 62) of circumferentially oriented cords, characterised in that, upon moving radially from the top of the sidewall towards the bottom of the bead, said alignment (3) is divided into at least two axially spaced circumferential alignments (31, 32), and in that all the circumferentially oriented cords (61, 62) arranged in the bead are located between said carcass cord alignments (31, 32) and/or axially on a single side thereof, and in that the carcass is made from a continuous carcass cord (3), all said cord portions of each of the alignments (31, 32) of the bead (2) being connected together, two by two, by a loop (30) located at the radial level closest to the base (20) of the bead.

2. A tyre according to Claim 1, characterised in that all the circumferentially oriented cords arranged in the bead are located in their entirety between said carcass cord alignments (31, 32).

3. A tyre according to one of Claims 1 or 2, characterised in that a layer (5) of rubber stock having a Shore A hardness greater than 70 is interposed axially between the circumferentially oriented cords and the corresponding adjacent alignment of carcass cords.

4. A tyre according to one of Claims 1 to 3, characterized in that said loops (30) are arranged radially at a level lower than the lowermost part of the adjacent pile or piles of circumferential cords.

5. A tyre according to one of Claims 1 to 4, characterised in that it comprises two carcasses (C1, C2), the adjacent alignments (32, 33) thereof in the bead (2) being separated from each other by a filler material (8) which is without circumferential cords.

6. A tyre according to one of Claims 1 to 5, characterized in that, in the part of the sidewall located just above the zone of contact with the rim and below the equator, the rubber components located on opposite sides of the assembly of carcass cord alignments satisfy the following relationship:

$$\frac{\sum_i E_i\, e_i\, (ext)}{\sum_j E_j\, e_j\, (int)} \geq 3$$

in which $E_i$ or $E_j$ is the modulus in the radial direction, and $e_i$ or $e_j$ is the thickness of each component "i" or "j" in rubber on the outside and inside respectively of the assembly of carcass cord alignments.

7. A tyre according to Claim 3, characterized in that the layer (5) of rubber stock is a stock containing an SBR synthetic elastomer the Tg of which is between -70°C and -30°C, in a proportion of at least 40% of the total weight of elastomer.

8. A tyre according to Claim 7, characterized in that the SBR is used blended with PB the Tg of which is between -40°C and -10°C, the total proportion of SBR and PB synthetic elastomer being at least 40% of the total weight of elastomer.

9. A tyre according to Claim 7 or 8, characterized in that the SBR used is of solution type.

10. A tyre according to one of Claims 7 to 9, characterised in that the sulphur content of the stock of said layer (5) is between 5 and 8% of the total weight of elastomer and said stock contains adhesion-promoting additives.

**Patentansprüche**

1. Reifen mit mindestens einer Karkasse, die auf jeder Seite des Reifens nach unten hin in einem Wulst (2) verankert ist, dessen Unterseite (20) dazu bestimmt ist, auf einem Felgensitz montiert zu werden, wobei jeder Wulst nach oben um eine Flanke (1) verlängert ist, die Flanken (1) nach oben hin an eine Lauffläche angefügt sind, die Karkasse Karkassenfadenabschnitte aufweist, die nebeneinanderliegend angeordnet sind und im oberen Abschnitt der Flanke eine einzige Umfangsreihe (3) von Fadenabschnitten bilden, die in der Flanke (1) von oben nach unten verlaufen, und die genannte Karkasse im genannten Wulst (2) mittels mindestens eines Stapels (61 oder 62) von Fäden verankert ist, die in Umfangsrichtung ausgerichtet sind, dadurch gekennzeichnet, daß sich die genannte Reihe (3) während ihrer radialen Erstreckung von der Oberseite der Flanke zur Unterseite des Wulstes in mindestens zwei Umfangsreihen (31, 32) aufteilt, die axial voneinander abstehen, und daß die Gruppe von Fäden (61, 62), die in Umfangsrichtung ausgerichtet sind und im Wulst angeordnet sind, zwischen den genannten Reihen (31, 32) von Karkassenfäden und/oder axial auf der einen und derselben Seite dieser angeordnet sind, und daß die Karkasse aus einem durchgehenden Karkassenfaden (3) hergestellt ist, wobei alle genannten Fadenabschnitte einer jeden der Reihen (31, 32) des Wulstes (2) paarweise durch eine Schlinge (30) verbunden sind, die auf der radialen Höhe gelegen ist, die der Unterseite (20) des Wulstes nächstgelegen ist.

2. Reifen nach Anspruch 1, dadurch gekennzeichnet, daß die Gruppe von Fäden, die in Umfangsrichtung ausgerichtet und im Wulst angeordnet sind, in ihrer Gesamtheit zwischen den genannten Reihen (31, 32) von Karkassenfäden angeordnet ist.

3. Reifen nach einem der Ansprüche 1 oder 2, dadurch gekennzeichnet, daß eine Lage (5) aus einer Gummimischung mit einer Shore-Härte A, die größer ist als 70, axial zwischen den Fäden, die in Umfangsrichtung ausgerichtet sind, und der entsprechenden benachbarten Fadenreihe angeordnet ist.

4. Reifen nach einem der Ansprüche 1 bis 3, dadurch gekennzeichnet, daß die genannten Schlingen (30) radial in einer Höhe angeordnet sind, die niedriger ist als der unterste Abschnitt des oder der Stapel(s) benachbarter, sich in Umfangsrichtung erstreckender Fäden.

5. Reifen nach einem der Ansprüche 1 bis 4, dadurch gekennzeichnet, daß er zwei Karkassen (C1, C2) aufweist, wobei deren benachbarte Reiheen (32, 33) im Wulst (2) voneinander durch ein Füllmaterial (8) getrennt sind, in dem die Umfangsfäden fehlen.

6. Reifen nach einem der Ansprüche 1 bis 5, dadurch gekennzeichnet, daß in dem Abschnitt der Flanke, der unmittelbar über dem Berührungsbereich mit der Felge gelegen ist, sowie unter dem Äquator, die Bestandteile aus Gummi, ein beiderseits der Anordnung von Karkassenfadenreihen gelegen sind, die folgende Zuordnung beachten:

$$\frac{\sum_i E_i\, e_i\ (ext)}{\sum_j E_j\, e_j\ (int)} \geq 3$$

wobei $E_i$ oder $E_j$ das Modul in radialer Richtung ist, und $e_i$ oder $e_j$ die Dicke eines jeden Bestandteils "i" oder "j" aus Gummi an der Außenseite bzw. Innenseite der Gruppe von Karkassenfadenreihen ist.

7. Reifen nach Anspruch 3, dadurch gekennzeichnet, daß die Lage (5) aus Gummimischung eine Lage ist, die ein synthetisches Elastomer SBR (Styrol-Butadien-Copolymer) in einem Anteil von mindestens 40 % des Elastomer-Gesamtgewichts enthält, dessen Tg (Glasübergangstemperatur) zwischen -70°C und -30°C liegt.

8. Reifen nach Anspruch 7, dadurch gekennzeichnet, daß das SBR (Styrol-Butadien-Copolymer) in Mischung mit PB (Poly(1-buten)), dessen Tg (Glasübergangstemperatur) zwischen -40°C und -10°C liegt, in einem Anteil des gesamten synthetischen Elastomers SBR und PB im Wert von mindestens 40 % des Elastomer-Gesamtgewichts verwendet wird.

9. Reifen nach Anspruch 7 oder 8, dadurch gekennzeichnet, daß das benutzte SBR (Styrol-Butadien-Copolymer) dem Lösungs-Typ angehört.

10. Reifen nach einem der Ansprüche 7 bis 9, dadurch gekennzeichnet, daß der Schwefelanteil der Mischung der genannten Lage (5) zwischen 5 und 8% des Elastomer-Gesamtgewichts beträgt, und daß die genannte Mischung haftungsfördernde Zusätze aufweist.

Fig. 1

Fig. 2

C2  C1

3  3

33  31

34  32

64  63

62  61

5 5 8 5 5

30  30  30

*Fig 3*